# EUROPEAN PATENT APPLICATION

(11) **EP 4 744 481 A1**
(43) Date of publication of application: **20.05.2026**
(21) Application number: 25178175.3
(22) Date of filing: 22.05.2025
(51) Int. Cl.: A01K 63/00

(54) **SMART FISH TANK WITH DISPLAY**

(30) Priority: 14.11.2024 KR 20240161659
(71) Applicant: LG Electronics Inc., Yeongdeungpo-gu Seoul 07336 (KR)
(72) Inventor: PARK, Jimi, 07796 Seoul (KR); KIM, Byungsoo, 07796 Seoul (KR); SONG, Geunho, 07796 Seoul (KR)
(74) Representative: Vossius & Partner Patentanwälte Rechtsanwälte mbB

(57) **Abstract**

Provided is a smart fish tank (100) including a water tank (110) constructed to store water therein, a display module (120) that is positioned on a rear surface of the water tank (110) and outputs an image thereon, a water level sensor (142) that senses a level of water stored in the water tank (110), and a controller (180) that controls the image output on the display module (120) based on the water level sensed by the water level sensor (142), wherein the controller (180) sets a location corresponding to the water level sensed by the water level sensor (142) as a dividing line (1253), divides a screen of the display module (120) into an upper screen (1251) and a lower screen (1252) based on the dividing line (1253), and outputs different images on the upper screen (1251) and the lower screen (1252).

## Description

The present disclosure relates to a smart fish tank including a display module.

Generally, a fish tank may include a water tank having an accommodation space defined therein where water may be stored, and the water tank may have side surfaces made of transparent glass such that inside may be observed from outside. Sand, pebbles, gravel, aquatic plants, and various decorations are installed inside the water tank, water is filled inside the water tank, and then various ornamental fish are raised in the water tank.

The water tank is designed in various shapes such as a rectangular shape, a quadrangular shape, a circular shape, a column-type polygonal shape, a wall-mounted type, or the like based on a taste of a buyer such that the buyer may purchase a fish tank desired. Usually, the rectangular fish tank is used a lot.

Recently, the fish tank is being digitized to make management easier and easily reflect needs of a user by incorporating an electronic device such as an electronic water quality management device, a sensor device, and a lighting management device.

The present disclosure is intended to provide a smart fish tank including a display module that may be controlled based on an environment of the smart fish tank.

Provided is a smart fish tank including a water tank constructed to store water therein, a display module that is positioned on a rear surface of the water tank and outputs an image thereon, a water level sensor that senses a level of water stored in the water tank, and a controller that controls the image output on the display module based on the water level sensed by the water level sensor, wherein the controller sets a location corresponding to the water level sensed by the water level sensor as a dividing line, divides a screen of the display module into an upper screen and a lower screen based on the dividing line, and outputs different images on the upper screen and the lower screen.

The controller may change a location of the dividing line and adjust a size of the upper screen and a size of the lower screen when the water level sensed by the water level sensor changes.

The controller may change the output images based on the size changes of the upper screen and the lower screen.

The controller may control the display module such that the image output on the upper screen changes based on a change in illumination or time.

The controller may provide information on a water quality and ornamental fish in the water tank on the upper screen.

The controller may output an object floating on a water surface or a moving object on the upper screen.

An upper object output on the upper screen and a lower object output on the lower screen may constitute upper and lower parts of one object.

The lower object may have a location, a size, and a shape different from a location, a size, and a shape of the upper object corresponding to a difference in a refractive index between air and water.

The controller may output a water replenishment alarm on the upper screen when the water level sensed by the water level sensor is lower than a reference water level.

The controller may output an underwater environment on the lower screen.

The controller may adjust a size of an object included in the image output on the lower screen such that the object does not come into contact with the dividing line and a boundary of the lower screen.

The controller may limit a range of movement of an object included in the image output on the lower screen such that the object does not come into contact with the dividing line.

The controller may output an image of ornamental fish moving to the dividing line and eating food on the lower screen when providing the food.

The dividing line may include a gradient connecting a lower end of the upper screen with an upper end of the lower screen.

Provided is a method for controlling a display module located on a rear surface of a water tank including sensing a level of water in the water tank, setting a dividing line of the display module corresponding to the water level, and outputting different images on the display module on an upper screen located on the dividing line and a lower screen located under the dividing line.

The method may further include sensing a change in the water level sensed by a water level sensor, changing a location of the dividing line, and adjusting a size of the upper screen and a size of the lower screen.

The outputting of the different images on the display module on the upper screen and the lower screen may include outputting an upper object at a lower end of the upper screen and outputting a lower object at an upper end of the lower screen, the upper object and the lower object may constitute upper and lower parts of one object, and the lower part of the object may have a location, a size, and a shape different from a location, a size, and a shape of the upper part of the object depending on a refractive index.

The outputting of the different images on the display module on the upper screen and the lower screen may include limiting a size and a range of movement of an object output on the lower screen such that the object does not come into contact with the dividing line.

The smart fish tank according to at least one embodiment of the present disclosure may create the various atmospheres via the images output on the display module.

In addition, the smart fish tank according to at least one embodiment of the present disclosure may reduce the heterogeneity between the image output on the display module and the environment inside the water tank as the image is output on the display module by considering the level of water in the water tank.

In addition, the smart fish tank according to at least one embodiment of the present disclosure may easily perform the management of the smart fish tank by outputting the various information on the upper screen.

Effects that may be obtained from the present disclosure are not limited to the effects mentioned above, and other effects that are not mentioned will able to be clearly understood by a person having ordinary knowledge in the technical field to which the present disclosure belongs from the description below.

FIG. 1 is a conceptual diagram illustrating an embodiment of a smart fish tank of the present disclosure.

FIGS. 2 to 9 are diagrams illustrating embodiments of an image output on a display module of a smart fish tank of the present disclosure.

Description will now be given in detail according to exemplary embodiments disclosed herein, with reference to the accompanying drawings. The same or equivalent components may be provided with the same reference numbers, and description thereof will not be repeated. As used herein, the suffixes "module" and "part" are added or used interchangeably to facilitate preparation of this specification and are not intended to suggest distinct meanings or functions. In describing embodiments disclosed in this specification, relevant well-known technologies may not be described in detail in order not to obscure the subject matter of the embodiments disclosed in this specification. In addition, it should be noted that the accompanying drawings are only for easy understanding of the embodiments disclosed in the present specification, and should not be construed as limiting the technical spirit disclosed in the present specification. As such, the present disclosure should be construed to extend to any alterations, equivalents and substitutes in addition to those which are particularly set out in the accompanying drawings.

Although the terms first, second, etc. may be used herein to describe various elements, these elements should not be limited by these terms. These terms are generally only used to distinguish one element from another.

It will be understood that when an element is referred to as being "connected with" another element, the element can be directly connected with the other element or intervening elements may also be present. In contrast, it will be understood that when an element is referred to as being "directly connected with" another element, there are no intervening elements present.

A singular representation may include a plural representation unless it represents a definitely different meaning from the context.

The terms such as "include" or "have" used herein are intended to indicate that features, numbers, steps, operations, elements, components, or combinations thereof used in the following description exist and it should be thus understood that the possibility of existence or addition of one or more different features, numbers, steps, operations, elements, components, or combinations thereof is not excluded.

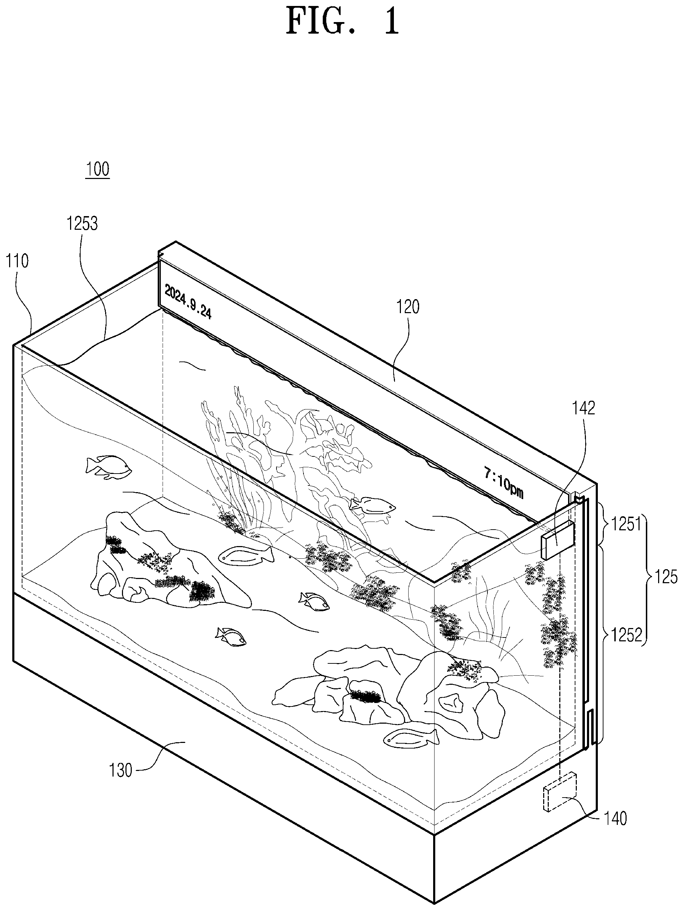

FIG. 1 is a conceptual diagram illustrating a smart fish tank 100 of the present disclosure. Referring to FIG. 1, the smart fish tank 100 of the present disclosure may include a water tank 110 that accommodates water therein, a display module 120, a water level sensor 142, a controller 140 that controls a display module 120, and a stand 130 that supports the water tank 110 and the display module 120.

The water tank 110 is a storage container that has side surfaces made of a transparent material and is able to store water inside. The water tank 110 of the present disclosure may have a rectangular shape. However, the present disclosure may not be limited thereto and may include a curved surface on the side surface of the water tank 110. An environment in which ornamental fish may live may be created using aquatic plants, gravel, or the like.

The water tank 110 of the present disclosure may include the display module 120 located on a rear surface thereof. The display module 120 is a device that outputs an image, and an atmosphere inside the water tank 110 is able to be easily changed via the image output from the display module 120.

For example, an image of sea may be output to create an atmosphere inside the sea, and aquatic plants or other fish may be output to create a rich fish tank environment. Alternatively, information regarding an environment inside the water tank 110, such as water quality information including a temperature and an oxygen saturation, may be provided, allowing a user to easily manage the fish tank.

The display module 120, as the device that outputs the image, may serve as a background for the water tank 110 to create the fish tank 100 with various atmospheres. In the past, a rear surface 114 of the fish tank 100 was generally transparent, allowing an opposite side to be seen or using a wall surface at the rear of the water tank 110 as the background.

In addition, it was inconvenient to directly change decorations such as the aquatic plants and the gravel of the fish tank 100 to change the atmosphere of the fish tank 100, so that the fish tank was used without any special changes in reality.

To avoid seeing a white wall surface from the opposite side or objects on the other side and to create a more diverse underwater atmosphere, in the present disclosure, the display module 120 is placed on the rear surface 114 of the water tank 110.

When the water tank 110 has a curved shape, the display module 120 may also have a curved shape corresponding to the shape of the water tank 110.

The display module 120 may convert an image signal, a data signal, an OSD signal, or a control signal processed by the controller, or an image signal, a data signal, a control signal, or the like received from an interface to generate a driving signal.

The display module 120 may include a display panel 125 having a plurality of pixels, and the plurality of pixels disposed in the display panel 125 may have RGB sub-pixels. Alternatively, the plurality of pixels disposed in the display panel 125 may have RGBW sub-pixels. The display module 120 may convert the image signal, the data signal, the OSD signal, the control signal, and the like processed by a controller 180 to generate the driving signal for the plurality of pixels.

A display casing 121 that accommodates the display panel 125 therein may have a frame shape, a front surface may have the frame shape surrounding the display panel 125 to expose a front surface of the display panel 125, and the rear surface 114 may include a rear casing 121 to cover a substrate, a wire, and the like for controlling the display panel 125 and the display module 120.

The display module 120 may be a plasma display panel (PDP), a liquid crystal display (LCD), an organic light emitting diode (OLED), a flexible display, and the like, and may also be a three-dimensional (3D) display.

The display module 120 may output the underwater image to create the underwater atmosphere, and may output the aquatic plants or other fish to create the rich fish tank 100 environment.

The display module 120 may output a moving image rather than a simple fixed image, thereby outputting other aquatic creatures other than the ornamental fish existing in the water tank 110. In addition, it may provide an image moving based on a flow of water to create a more realistic underwater environment.

The water level sensor 142, as a device that measures a height (a level) of water in the water tank 110, may be classified into a buoyancy sensor, an ultrasonic sensor, an optical sensor, a conductivity sensor, and the like depending on an operating scheme thereof.

The buoyancy sensor senses the water level using a buoy or a buoyancy switch. The buoy moves up and down depending on the water level, and when a set water level is reached, the switch operates to trigger water replenishment or transmit an alarm.

The ultrasonic sensor may measure the water level by emitting an ultrasonic wave to a water surface and measuring a time it takes for the ultrasonic wave to reflect and return. Because parts thereof do not come into contact with water, it is easy to maintain the sensor.

The optical sensor uses a principle that an optical signal changes when the sensor located at a specific water level comes into contact with water and thus has a simple configuration, but has a limitation of only being able to sense whether the set water level has been reached.

The conductivity sensor senses the water level via a difference in water conductivity. When water comes into contact with an electrode of the sensor, current flows, allowing the water level to be measured.

When the water level sensed by the water level sensor 142 falls to a reference water level or lower, the water replenishment alarm may be provided. The controller 140 controls the image output on the display panel 125. The controller 140 of the present disclosure may set a dividing line 1253 on the screen of the display panel 125 in accordance with the water level in the water tank 110 sensed by the water level sensor 142, and may divide the screen into an upper screen 1251 and a lower screen 1252 based on the dividing line 1253. The controller 140 may output different images on the upper screen 1251 and the lower screen 1252.

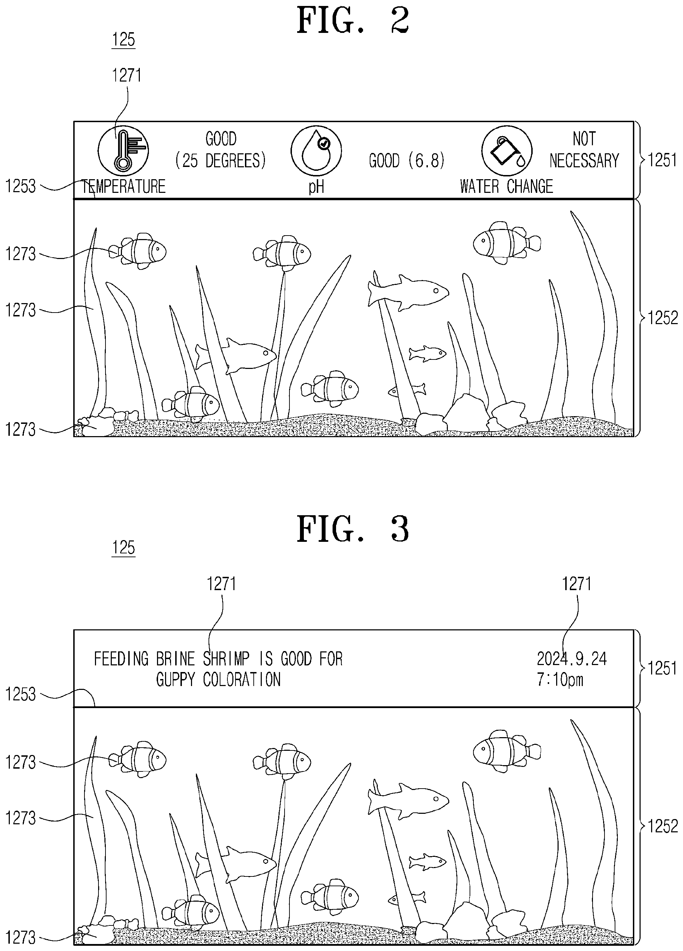

Hereinafter, the image output on the display panel 125 under the control of the controller 140 will be described with reference to FIGS. 2 to 9. FIGS. 2 to 9 are diagrams illustrating embodiments of the image output on the display panel 125 of the smart fish tank 100 of the present disclosure.

The display panel 125 may set the dividing line 1253 at a location corresponding to the water level in the water tank 110 collected via the water level sensor 142. The dividing line 1253 may be a straight line or may be a curved line, and may form a gradient within a predetermined range at the location corresponding to the water level.

The dividing line 1253 may be formed as a gradient connecting a lower end of the upper screen 1251 with an upper end of the lower screen 1252, so that the upper screen and the lower screen 1252 may create a situation where they are divided into underwater and above-water sections with the water surface as a boundary.

When the water level sensed by the water level sensor 142 changes, the controller 140 may change the location of the dividing line 1253 and adjust the images output on the upper screen 1251 and the lower screen 1252 accordingly. When the water level is lowered, only a size of a lower object 1273 coming into contact with the dividing line 1253 may be changed or a ratio of the image of the lower screen 1252 may be reduced.

In the case of the image located above the water surface of the upper screen 1251, its location may be changed based on the change in the location of the dividing line 1253. Alternatively, a length of the upper screen 1251 may be increased corresponding to the changed vertical level of the dividing line 1253.

The lower screen 1252 may output the sea or underwater image that matches the environment of the water tank 110. Depending on fish species, an image of an environment in which they live may be output, and in addition to a fixed image, the lower object 1273 such as moving aquatic plants or fish may be included. When the lower object 1273 output on the lower screen 1252 is cut off at the dividing line 1253, it is easy to recognize the same as the image output by the display panel 125 that is different from an actual object in the water tank 110.

For realism of the lower screen 1252, the lower object 1273 may be adjusted in a size so as not to be in contact with the dividing line 1253. The display panel 125 may be controlled such that the lower object 1273 is not cut off not only at the dividing line 1253 but also at a lateral boundary of the lower screen 1252.

When the object output on the lower screen 1252 is a moving object, a range of movement thereof may be defined such that the object moves within the dividing line 1253 and the lateral boundary of the lower screen 1252.

The upper screen 1251 located above the dividing line 1253 may output a screen different from that of the lower screen 1252. As shown in FIG. 2, it may provide state information 1271 such as temperature and pH in the water tank 110. In addition, it may provide water quality information necessary for the fish to live, such as ammonium/nitrate, and provide information on a birth date, whether a water change is necessary, and a filter replacement time to assist in making management of the fish tank easier.

Alternatively, as shown in FIG. 3, the upper screen 1251 may provide customized information 1271 based on the species of fish being raised. The customized information may include information on appropriate feed, information on compatible fish species for cohabitation, and information on appropriate water salinity, temperature, and feeding time depending on the fish species.

The upper screen 1251 may provide basic information such as date and time in addition to the information related to the smart fish tank 100, and may also provide information on temperature and humidity of an installation space as well as a water temperature in the water tank 110.

The upper screen 1251 may also provide information on the image displayed on the lower screen 1252 (e.g., a captured location), and the aforementioned information may not be fixed, but may be changed periodically or changed to other information in response to an input command of the user.

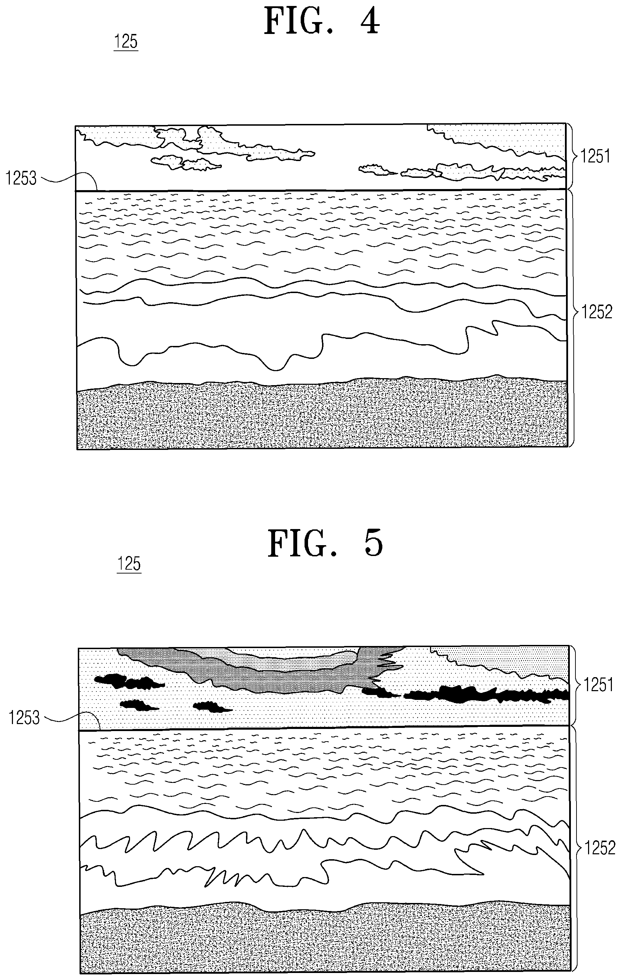

Alternatively, as shown in FIGS. 4 and 5, an image may be output on the upper screen 1251 other than text information. The image output on the upper screen 1251 may include a picture or a character preferred by the user, or may provide a photographic image of sky, a lotus flower located on the water surface, or the like.

The upper screen 1251 may change the image to a different image depending on time. As shown in FIG. 4, a blue sky may be output during the day, a red screen may be output during sunrise and sunset, and a dark night sky may be output at night, as shown in FIG. 5. Alternatively, weather information may be received and different images may be output depending on the weather.

The change over time may be provided on the lower screen 1252 in addition to the upper screen 1251. Brightness of the lower screen 1252 may be adjusted based on the time zone to adjust a biological rhythm of the ornamental fish.

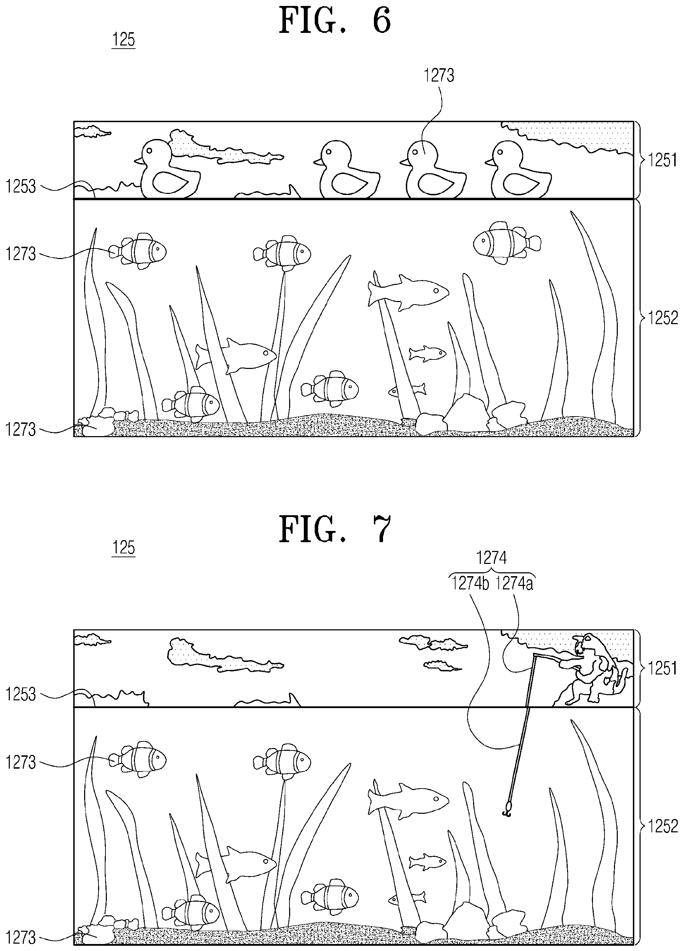

In addition to a still image, the upper screen 1251 may also output a moving upper object 1272 as shown in FIG. 6. The moving upper object 1272 may include, for example, a duck floating on water or a bird moving in the sky.

In addition to animals, the upper object 1272 may include moving clouds in the sky or moving grass on the water surface. In addition to the actual photographic image, the upper object 1272 may include a user's preferred image, such as a character or an icon. As shown in FIG. 7, an object that is partially submerged under water and partially above water may be divided into an upper object 1274a output on the upper screen 1251 and a lower object 1274b output on the lower screen 1252.

The controller 140 may output an upper part of a fishing line 1274, a lotus stem, a tree trunk, or the like on the upper screen 1251 and a lower part thereof on the lower screen 1252. The controller may also output the duck swimming on the water surface as the upper object on the upper screen 1251 and output duck's legs as the lower object on an upper end of the lower screen 1252.

In this regard, the upper object 1274a and the lower object 1274b may be rendered in conjunction with each other. The object such as the tree or the stem does not move, but the moving object may move as a movement of the upper object 1272 and a movement of the lower object 1273 are in synchronization with each other.

The upper object 1274a and the lower object 1274b may be arranged so as to be recognized as one object. However, when an upper object 1275a and a lower object divide one object 1275 in a vertical direction, because refractive indices of air and water are different from each other, the upper object 1275a and the lower object 1275b do not constitute a continuous image at the dividing line 1253.

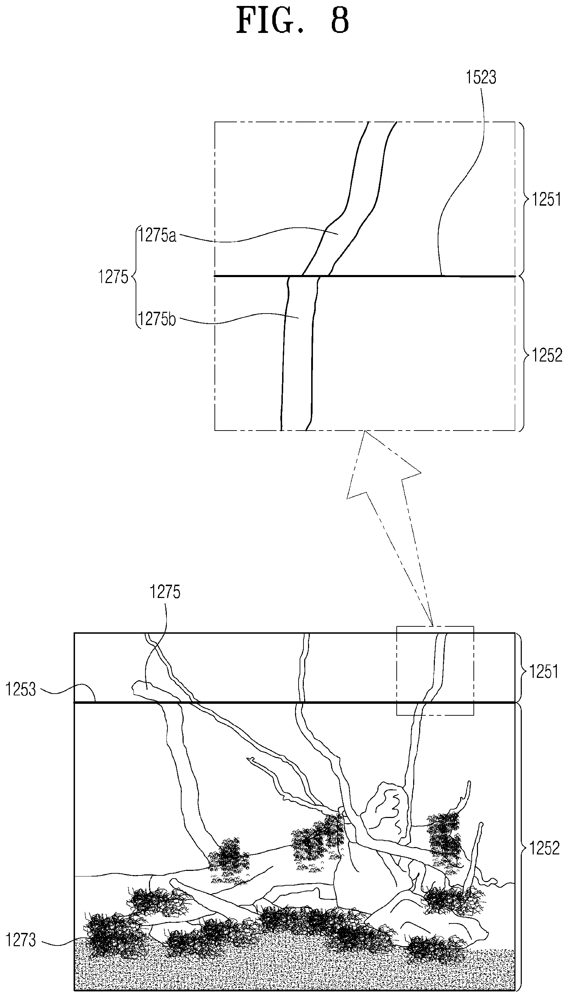

Referring to FIG. 8, angles of an extension direction of the upper object 1275a and an extension direction of the lower object 1257b may be different from each other. In particular, an upper portion of the lower object 1257b may have a distorted shape because of a change in the refractive index at a portion adjacent to the dividing line 1253.

The display panel 125 may output one object extending from the upper screen 1251 to the lower screen 1252 as the upper object 1275a and the lower object 1275b in a divided manner. That is, the upper object 1275a and the lower object 1275b may have a discontinuity at the dividing line.

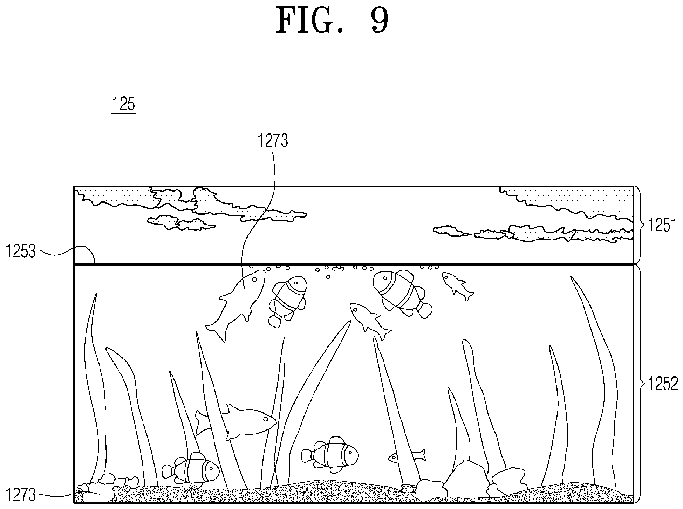

As shown in FIG. 9, the lower object output on the lower screen 1252 may be an image for inducing or teaching a behavior of the ornamental fish in the water tank 110. When feeding the fish, an ornamental fish object output on the lower screen 1252 may move in a direction of the dividing line 1253 and take an action of eating to induce the ornamental fish in the water tank 110 to eat the food.

When the food is left in the water tank 110 for a long time, the water quality of the water tank 110 deteriorates. Therefore, the present disclosure has an advantage of being able to regularly supply the food for health management of the ornamental fish.

As described above, the smart fish tank 100 according to at least one embodiment of the present disclosure may create various atmospheres via the image output on the display panel 125.

In addition, the smart fish tank 100 according to at least one embodiment of the present disclosure may output the image on the display panel 125 by considering the water level in the water tank 110, thereby reducing heterogeneity between the image output on the display panel 125 and the environment in the water tank 110.

In addition, the smart fish tank 100 according to at least one embodiment of the present disclosure may output the various information on the upper screen 1251, thereby easily managing the smart fish tank 100.

## Claims

1. A smart fish tank (100) comprising:
a water tank (110) configured to store water therein;
a display module (120) positioned on a rear surface of the water tank (110) and configured to output an image thereon;
a water level sensor (142) configured to sense a level of water stored in the water tank (110); and
a controller (180) configured to control the image output on the display module (120) based on the water level sensed by the water level sensor (142),
wherein the controller (180) is configured to set a location corresponding to the water level sensed by the water level sensor (142) as a dividing line (1253), divide a screen of the display module (120) into an upper screen (1251) and a lower screen (1252) based on the dividing line (1253), and output different images on the upper screen (1251) and the lower screen (1252).

2. The smart fish tank (100) of claim 1, wherein the controller (180) is configured to change a location of the dividing line (1253) and adjust a size of the upper screen (1251) and a size of the lower screen (1252) when the water level sensed by the water level sensor (142) changes.

3. The smart fish tank (100) of claim 2, wherein the controller (180) is configured to change the output images based on the size changes of the upper screen (1251) and the lower screen (1252).

4. The smart fish tank (100) of any of claims 1 to 3, wherein the controller (180) is configured to control the display module (120) such that the image output on the upper screen (1251) changes according to a change in illumination or time.

5. The smart fish tank (100) of any of claims 1 to 4, wherein the controller (180) is configured to provide information on water quality and ornamental fish in the water tank (110) on the upper screen (1251).

6. The smart fish tank (100) of any of claims 1 to 5, wherein the controller (180) is configured to output an object (1273) floating on a water surface or a moving object on the upper screen (1251).

7. The smart fish tank (100) of any of claims 1 to 6, wherein an upper object (1274a, 1275a) output on the upper screen (1251) and a lower object (1274b, 1275b) output on the lower screen (1252) constitute upper and lower parts of one object (1274, 1275).

8. The smart fish tank (100) of claim 7, wherein the lower object (1274b) has a location, a size, and a shape different from a location, a size, and a shape of the upper object (1274a) corresponding to a difference in a refractive index between air and water.

9. The smart fish tank (100) of any of claims 1 to 8, wherein the controller (180) is configured to output a water replenishment alarm on the upper screen (1251) when the water level sensed by the water level sensor (142) is lower than a reference water level.

10. The smart fish tank (100) of any of claims 1 to 9, wherein the controller (180) is configured to output an underwater environment on the lower screen (1252).

11. The smart fish tank (100) of any of claims 1 to 10, wherein the controller (180) is configured to adjust a size of an object included in the image output on the lower screen (1252) such that the object does not come into contact with the dividing line (1253) and a boundary of the lower screen (1252).

12. The smart fish tank (100) of any of claims 1 to 11, wherein the controller (180) is configured to limit a range of movement of an object included in the image output on the lower screen (1252) such that the object does not come into contact with the dividing line (1253).

13. The smart fish tank (100) of any of claims 1 to 12, wherein the controller (180) is configured to output an image of ornamental fish moving to the dividing line (1253) and eating food on the lower screen (1252) when providing the food.

14. The smart fish tank (100) of any of claims 1 to 13, wherein the dividing line (1253) includes a gradient connecting a lower end of the upper screen (1251) with an upper end of the lower screen (1252).

15. A method for controlling a display module (120) located on a rear surface of a water tank (110), the method comprising:
sensing a level of water in the water tank (110);
setting a dividing line (1253) of the display module (120) corresponding to the water level; and
outputting different images on the display module (120) on an upper screen (1251) located on the dividing line (1253) and a lower screen (1252) located under the dividing line (1253).
